Europäisches Patentamt

European Patent Office

Office européen des brevets

(11) Publication number: **0 421 629 A1**

# EUROPEAN PATENT APPLICATION

(21) Application number: **90310188.9**

(22) Date of filing: **18.09.90**

(51) Int. Cl.5: **C01B 17/90**

(30) Priority: **21.09.89 US 410471**

(43) Date of publication of application:
**10.04.91 Bulletin 91/15**

(84) Designated Contracting States:
**DE ES FR GB IT NL**

(71) Applicant: **CHEMETICS INTERNATIONAL COMPANY LTD.**
**200 Town Centre Boulevard**
**Markham, Ontario L3R 8H8(CA)**

(72) Inventor: **Lawler, Daniel W.**
**81 Delayne Drive**
**Aurora, Ontario, L4G 5B5(CA)**
Inventor: **Lyne, Edward G.C.**
**18 Bellehaven Crescent**
**Scarborough, Ontario, M1M 1H3(CA)**

(74) Representative: **Alner, Henry Giveen Hamilton et al**
**H.G.H. Alner & Co. Ltd., 5 Martins Drive**
**Wokingham, Berkshire RG11 1NY(GB)**

(54) **Sulphuric acid recovery process.**

(57) In a sulphuric acid recovery process, wherein the majority of acid is reclaimed and recycled by spray drying a waste acid stream, an improved process for recovering the sulphur content of the metal sulphates. The improved process comprises roasting the metal sulphates to generate metal oxides and a gaseous stream of sulphur dioxide and sulphur trioxide, which gaseous stream is fed to the spray drier to reduce the level of heated make-up air required for spray drying, and for recovery of the sulphur value contained in the gaseous stream. The process reduces the loss of sulphur value and produces a solid metal oxide powder which is easier to dispose.

FIG. 1

# SULPHURIC ACID RECOVERY PROCESS

This invention relates to a process for the recovery of sulphuric acid from a waste sulphuric acid stream, and more particularly to a process for the recovery of sulphuric acid from waste metal sulphates.

Waste sulphuric acid may be obtained from a variety of operations such as alkylation of petroleum refinery products or nitration of aromatic compounds, the drying of chlorine and similar materials, and from titanium dioxide manufacture. While the disposal of these waste acids has long been a problem, a solution has become increasingly urgent since these wastes, if not treated, present a threat to the environment.

One method of recovering usable sulphuric acid from these waste acids is to subject the waste acid to evaporation to produce gaseous sulphuric acid, sulphur trioxide and water, and to recover the gaseous products as sulphuric acid. An example of this type of process is described in U.S. Patent No. 4,376,107 (Morgenthaler).

In U.S. Patent No. 3,713,786 (Umstead) a process of spray drying the waste acid stream is described and involves spraying waste sulphuric acid into a fuel heated air stream.

The resultant sulphuric acid vapour and sulphur trioxide of the gas generated can be collected in a sulphuric acid absorption means such as a partial condensation train, described in U.S. Patent No. 4,547,353 (Cameron). The spray drying process generally is operated to eliminate sulphur dioxide generation but any sulphur dioxide generated during spray drying may escape to the atmosphere.

When the waste acid stream contains metal sulphate contaminants, such as when the waste acid stream is from a titanium dioxide manufacturing process, as disclosed in U.S 3,713,786, an essentially dry metal sulphate powder is also generated during spray drying. This metal sulphate powder poses its own disposal problems which are not discussed by Umstead.

These metal sulphates typically comprise the sulphate salts of iron, magnesium, aluminum and titanium and are readily soluble in water. Landfill of these salts for disposal is prohibitively expensive since leaching of the metal salts into the local water table must be prevented. In addition, this disposal route results in the loss of valuable sulphur content as sulphate salts.

It is known in the sulphuric acid recovery industry that these sulphate salts can be treated in a secondary sulphuric acid recovery process, in which the sulphate salts are heated in a "roaster" at temperatures up to about 1000°C to effect conversion of the metal sulphates to metal oxides.

These metal oxides can be landfilled more economically since the oxides are less water soluble than the sulphate salts.

Heating of the metal sulphates in the roaster, typically, generates a roaster off-gas of primarily sulphur dioxide (8% w/w of off-gas), and sulphur trioxide (0.5%). In order to recover the sulphur value of the roaster off-gas, it is necessary to effect conversion of the sulphur dioxide to sulphur trioxide in a catalyst containing converter bed and then absorb the sulphur trioxide content in one or more sulphuric acid absorption towers.

In order to provide for the efficient absorption of sulphur trioxide, it is generally desirable to have a standard metallurgical acid manufacturing process, such as a double absorption sulphuric acid manufacturing process, comprising a wet gas cleaning operation, and two absorption towers, which towers are preceded and separated by, a sulphur dioxide to sulphur trioxide converter bed. After absorption of the sulphur trioxide, the remaining gases are vented to the atmosphere.

Generally, the roaster off-gas must be cooled to about 350°C and most of the particulate metal oxides are removed before the partially cleaned gases can be fed to a standard single or double absorption metallurgical acid plant. In the acid plant, the gas is first cleaned in a wet gas cleaning section comprising, for example, open spray towers, packed cooling towers and electrostatic mist precipitators. The cooled, cleaned gases exiting the wet gas cleaning section are dried and reheated to 400°C, and the sulphur dioxide is converted to sulphur trioxide in a converter bed(s). The sulphur trioxide formed is absorbed into sulphuric acid in an absorption tower(s). After exiting the converter bed(s), the gases must be cooled prior to entering the absorption tower(s) in order to allow for efficient sulphur trioxide absorption.

This metallurgical sulphuric acid manufacturing plant equipment in the secondary acid recovery process, such as the wet gas cleaning equipment, the converter bed(s), the absorption tower(s), and the heat exchangers, which are used to treat the roaster off-gas, adds significantly to the capital cost of the total sulphuric acid recovery apparatus.

It is an object of the present invention to provide a process for the recovery of the sulphuric acid from a metal sulphate containing waste acid stream.

It is a further object of the present invention to provide a process for the recovery of the sulphur values of the metal sulphates of the said waste acid stream.

It is a still further object of the present invention to provide a prooess for the recovery of the sulphur values of said metal sulphates that minimizes the apparatus capital costs.

Accordingly, the invention provides a sulphuric acid recovery process having a primary acid recovery process comprising:

a) spray drying a metal sulphate containing waste stream of sulphuric acid in a heated gas stream of a spray drier, to produce a sulphur trioxide and sulphur dioxide gas stream and water vapour, which water vapour exits the process, and an essentially dry collection of metal sulphate solids;

b) separating said metal sulphate solids from said sulphur trioxide and sulphur dioxide gas stream;

c) feeding said sulphur trioxide and sulphur dioxide gas stream to a catalyst containing converter bed to effect conversion of said sulphur dioxide to sulphur trioxide and generate an essentially sulphur dioxide free converter exit gas; and

d) feeding said sulphur dioxide free converter exit gas to a sulphur trioxide absorption means; and a secondary sulphuric acid recovery process comprising:

e) feeding said metal sulphate solids to a roaster wherein said solids are heated to effect decomposition of said metal sulphates to metal oxides and production of a sulphur dioxide containing roaster off-gas; and combining said sulphur dioxide containing roaster off-gas with said sulphur trioxide and sulphur dioxide gas stream in said primary acid recovery process to produce a combined sulphur dioxide roaster off-gas and sulphur trioxide and sulphur dioxide gas stream.

In a preferred embodiment of the process according to the invention, the sulphur dioxide containing roaster off-gas is optionally fed to said heated gas stream in said spray drier or with said heated gas stream to said spray drier.

When the roaster off-gas is recycled to the spray drier or, in general, to the primary acid recovery process, to effect production of said combined sulphur dioxide roaster off-gas and sulphur trioxide and sulphur dioxide gas stream, the need for a separate metallurgical acid plant in the secondary acid recovery process is eliminated. This results in capital cost savings for the sulphuric acid recovery process apparatus.

The term roaster is generally meant to include any suitable heat treatment apparatus capable of heating the solids obtained from the spray drier to a temperature where the metal sulphates are converted to metal oxides. The roaster may be, for example, a fluidized bed roaster or a rotary kiln.

The temperature of the roaster off-gas is approximately 1000°C. Prior to feeding this hot gas stream to the primary acid recovery process it is preferable that the gas stream be cooled. Accordingly, the present invention provides a process as hereinabove described wherein said roaster off-gas are cooled in a heat exchanger means prior to being fed to the primary acid recovery process. Preferably, the heat exchanger means is a boiler.

Some of the metal oxide solids produced in the roaster are removed directly from the roaster. However, a portion of the metal oxides are also carried over from the roaster in the off-gas stream. The amount of solids carried over in the gas stream is reduced when some of the solids settle and collect in the boiler and are subsequently removed. Preferably, in order to provide essentially particulate free roaster off-gas to the primary acid recovery process, the roaster off-gas are fed to a particulate removal means, such as for example, an electrostatic precipitator or a high efficiency cyclone, after exiting the heat exchanger means. Another form of particulate removal means is a porous filter which can also be used as the means for separating the said metal sulphate solids in the primary acid recovery process from the said sulphur trioxide and sulphur dioxide gas stream.

The catalyst containing converter bed is of the type known within the sulphuric acid manufacturing industry.

If the primary and secondary recovery processes were independently operated, the primary gas stream from the spray drier would have a sulphur dioxide concentration of about 1000ppm and the sulphur dioxide concentration of the gas from the roaster would have a concentration of about 8 to 12%. In the present invention, the combined gas stream which is fed to the catalyst containing converter bed contains about 1% sulphur dioxide, 25% water, 2.2 % sulphuric acid and 0.05% sulphur trioxide. When this combined gas stream is fed to the converter bed, it was unknown whether satisfactory conversion of sulphur dioxide to sulphur trioxide would occur. Surprisingly, it has been found that the sulphur dioxide levels exiting the plant are acceptably low enough to indicate that satisfactory conversion of sulphur dioxide to sulphur trioxide has occurred.

In the prior art, it is known that a mixture of sulphur dioxide, sulphur trioxide and water vapour can be fed to a catalyst containing converter bed wherein the sulphur dioxide is converted to sulphur trioxide without adverse effects on the catalyst used. This is disclosed for example in "WSA Process successfully treats lean H₂S Gases", P. Schoubye, Technology, December 21, 1981, Oil & Gas Journal.

However, this article and the prior art are silent in regards to a process involving supplying a gas mixture comprising water vapour, sulphur dioxide, sulphur trioxide and a significant amount of sulphuric acid vapour, as in the present invention, to a catalyst containing converter bed. When this gas mixture is fed to a converter bed, the effect of such a mixture upon the vanadium pentoxide catalyst, used in the converter bed, was also not known. Any sulphation by the sulphuric acid vapour of the catalyst would effect conversion to vanadium sulphate, resulting in the rapid loss of catalytic activity.

Furthermore, operation of the converter bed in the presence of the sulphuric acid and water vapour might also limit conversion of the sulphur dioxide to sulphur trioxide to such low limits as to render the use of the catalyst ineffective. Surprisingly, it has been found that the sulphur dioxide, in this gas mixture, when fed to the catalyst containing converter bed, is effectively converted to sulphur trioxide and that no perceived loss of catalytic activity of the catalyst is observed.

In the present invention, the sulphur trioxide absorption means can be any known absorption means, such as for example, a packed or sieve plate counter-current gas/liquid absorption tower as known in the industry, a Venturi absorber, or most preferably a partial condensation train comprising two parallel packed absorption zones as described in U.S. Patent No. 4,547,353.

In order to spray dry the waste acid stream in the primary acid recovery process, the acid is sprayed into a tower and mixed with hot air at approximately 1000°C that has been heated by combustion of a suitable fuel. The hot air stream causes the evaporation of sulphuric acid and water and the dissociation of sulphuric acid to sulphur trioxide and water coupled with the generation of sulphur dioxide. Evaporation of the waste acid stream cools the hot air so that the spray drier exit gas has a temperature of about 400 to 500°C and thus is preferably at a temperature suitable for feeding to a sulphur dioxide to sulphur trioxide converter bed.

The sulphur dioxide containing roaster off-gas can be combined with any sulphur dioxide containing gas of the primary acid recovery process prior to the converter means, however, it is most preferred that said off-gas are combined with, or replace, a portion of the heated air stream in the spray drier. In this manner, the fuel consumption of the total process is reduced since the hot off-gas does not need as much heating as ambient make-up air. Combining the off-gas with the spray drier air supply is also preferred since all gas volumes for the remainder of the primary acid recovery process will be reduced in comparison to a process where the off-gas is combined with a sulphur dioxide containing gas stream after the spray drier.

This allows the use of smaller sized equipment and gas transfer lines in the primary acid recovery process downstream of the spray drier, leading to lower capital costs.

The gas exiting the roaster can also be mixed with an air quench in order to cool the gas in place of, or in combination with the boiler. The quenched gas stream can then be fed to the spray drier.

It is also to be understood that the present invention applies to a manufacturing process wherein all or a portion of the sulphur dioxide and sulphur trioxide generated in the secondary acid recovery process, is removed in a standard metallurgical acid plant prior to feeding the treated roaster off-gas to the primary acid recovery process. The cleaned sulphur dioxide and sulphur trioxide containing roaster off-gas may be fed to a catalyst containing converter bed followed by a sulphur trioxide absorption tower in said secondary acid recovery process. This process permits the recycle of heated air to the spray drier and allows the conversion of all, or a portion of, the sulphur dioxide to sulphur trioxide in the secondary acid recovery process, or, allows the absorption of some or all of the sulphur trioxide generated in the secondary acid recovery process.

Accordingly, the invention provides a process as hereinabove defined further comprising;

f) feeding said roaster off-gas to a second catalyst containing converter bed to generate a sulphur trioxide enriched gas;

g) feeding said sulphur trioxide enriched gas to a sulphuric acid absorption means to produce a sulphur trioxide depleted gas; and

h) combining said sulphur trioxide depleted gas with said sulphur trioxide and sulphur dioxide gas stream in said primary acid recovery process.

In order that the invention may be better understood, several embodiments will now be described, by way of example only, with reference to the drawings wherein:

Figure 1 is a schematic diagram of a preferred apparatus and process according to the invention; and

Figure 2 is a schematic diagram of an alternative process according to the present invention.

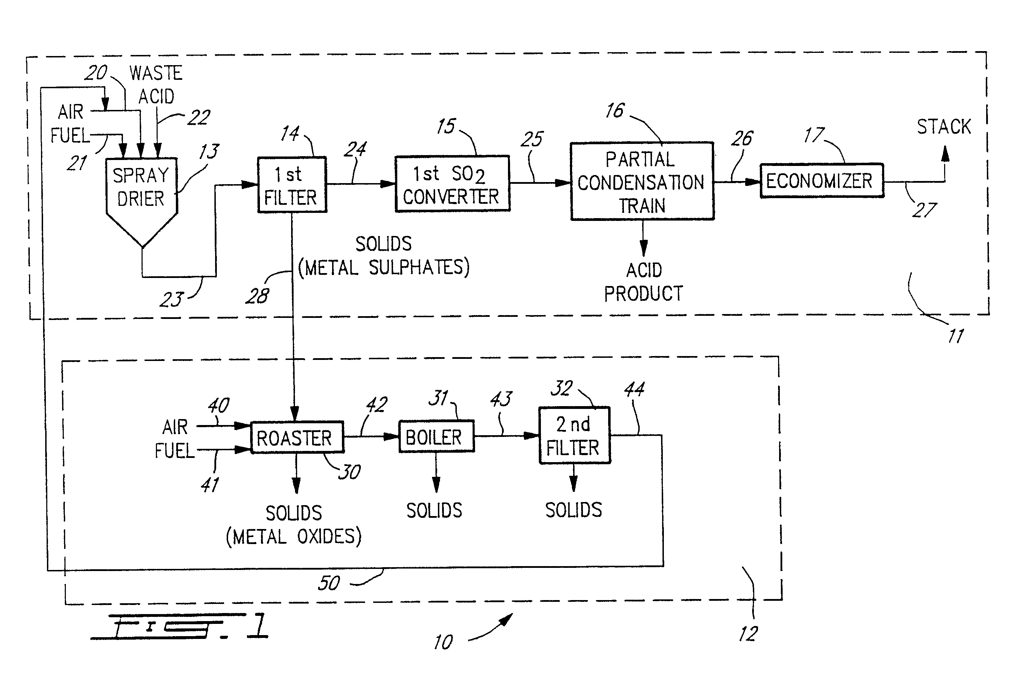

In Figure 1, a sulphuric acid recovery plant generally designated as 10, is divided into a primary acid recovery section 11 and a secondary acid recovery section 12. In primary acid recovery section 11 is spray drier 13, a first filter 14, a first sulphur dioxide to sulphur trioxide converter 15, a partial condensation train 16 and an economizer 17. Connected to spray drier 13 are air and fuel supply lines 20 and 21 respectively, and waste acid supply line 22. Conduit 23 connects the spray drier 13 to first filter 14, which filter is also connected to first converter 15 by conduit 24. First converter 15 is also connected to partial condensation train 16 by conduit 25 and the partial condensation train is also connected to economizer 17 by conduit 26. The economizer is connected to the recovery plant exit stack (not shown) by conduit 27.

First filter 14 is also connected to roaster 30 in the secondary acid recovery section 12 by conduit 28. Also present in secondary acid recovery section 12 are boiler 31 and second filter 32. Air and fuel lines 40 and 41 respectively are connected to roaster 30. Conduit 42 connects roaster 30 with boiler 31 and conduit 43 connects boiler 31 with second filter 32. Conduit 50 connects second filter 32 with spray drier air line 20.

In operation, waste acid comprising metal sulphates, is fed to spray drier 13 in the primary acid recovery section 11 of a sulphuric acid recovery plant 10, through waste acid supply line 22. Said aoid is mixed with a hot gas stream of 1000°C produced by burning the fuel supplied to the spray drier through fuel supply line 21 in the air supplied to the spray drier through air supply line 20. In the spray drier said waste acid is vapourized in the hot gas stream to effect production of solid particles of metal sulphates and a gaseous mixture of sulphuric acid, sulphur trioxide, sulphur dioxide and water with a temperature of about 400°C. Said mixture is fed to first filter 14 via conduit 23. In said first filter 14, the metal sulphates are separated from the gaseous mixture, and are fed to roaster 30 via conduit 28. The gaseous mixture is fed to first sulphur dioxide to sulphur trioxide converter 15 via conduit 24. In converter 15, the sulphur dioxide present in the gaseous mixture is converted to sulphur trioxide in order to effect production of an essentially sulphur dioxide-free gaseous mixture of about 450°C. Said sulphur dioxide-free gaseous mixture is fed to partial condensation train 16 via conduit 25. In said partial condensation train 16 the sulphur trioxide and sulphuric acid present in the sulphur dioxide-free gaseous mixture is absorbed into sulphuric acid to effect production of an essentially sulphur trioxide-free gas stream.

The absorption of sulphur trioxide into sulphuric acid is well known within the art and therefore the specific acid inlet and outlet lines, pumps and storage arrangements are not shown.

The essentially sulphur trioxide-free gas stream is fed to economizer 17 through conduit 26. In economizer 17 said gas stream is cooled to 110°C, and any remaining sulphur containing compounds may be absorbed, prior to exiting the primary acid recovery section 11 through conduit 27.

In roaster 30 the metal sulphates are heated to 1000°C to effect production of a sulphur dioxide and sulphur trioxide gas mixture and solid metal oxides. The metal oxides are removed from roaster 30 and are disposed. Said gas mixture is fed to boiler 31 wherein the gas mixture is cooled to 370°C via conduit 42 prior to being fed to second filter 32 through conduit 43. Some solids collect are removed from boiler 31. In second filter 32 any remaining solids are removed from said gas mixture and are disposed.

The hot exit gas from second filter 32 comprises a mixture of primarily 8% sulphur dioxide with 0.5% sulphur trioxide in air. This mixture, according to the present invention, is fed to the spray drier air line 20 through conduit 50 and thus reduces the amount of fuel that is needed to heat the spray drier gas stream to the desired temperature, and eliminates the need for sulphur dioxide and sulphur trioxide removal in the secondary acid recovery section as discussed hereinabove.

As discussed hereinbefore, the hot exit gas is preferably fed to the spray drier but may also be added to any sulphur dioxide containing gas streams in the first acid recovery stage 11. Suitable addition points include, but not shown, conduit 23, first filter 14 or conduit 24 if filtered.

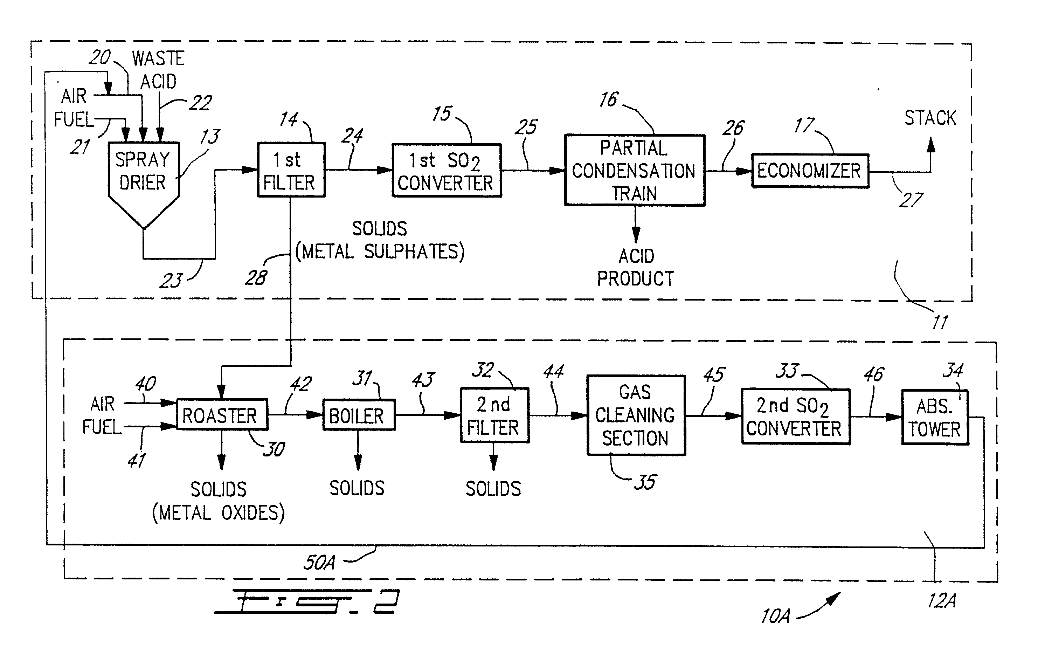

Removal of the sulphur dioxide and sulphur trioxide in the secondary acid recovery section may still be practiced within the scope of the present invention. In Figure 2, a waste acid recovery plant 10A is shown which is similar to the plant shown in Figure 1, with the exception that a single absorption metallurgical acid plant comprising a wet gas cleaning section 35, a second sulphur dioxide to sulphur trioxide converter 33 and absorption tower 34 have been added to secondary acid recovery section 12A. In addition, conduits 44, 45 and 46 have been added which connect, respectively, wet gas cleaning section 35 to second filter 32, second converter 33 to wet gas cleaning section 35, and absorption tower 34 to second converter 33. Conduit 50 has been replaced by conduit 50A which conduit 50A connects absorption tower 34 to the spray drier air supply line 20.

In operation, plant 10A operates as hereinabove described for plant 10. However, in plant 10A the hot exit gas from second filter 32 is fed to wet gas cleaning section 35 via conduit 44, wherein the hot gas is cooled, any particulate material remaining is removed, and any sulphur trioxide present is removed. The cleaned exit gas is fed to converter bed 33 after drying via conduit 45. In second converter 33 the sulphur dioxide present in the hot exit gas is partially or completely converted to sulphur trioxide to produce a sulphur trioxide enriched gas stream. Said sulphur trioxide enriched gas stream is fed to absorption tower 34, via conduit 46, wherein all or a part of the sulphur trioxide present is removed to produce a sulphur trioxide depleted gas stream. The sulphur trioxide depleted gas stream is fed to the air supply line 20 via conduit 50A.

Numerous variations of the process exist which fall within the scope of the present invention. These include for example, adding only a wet gas cleaning section and a sulphur dioxide to sulphur trioxide converter to the secondary recovery section without adding the absorption tower.

## Claims

1. A sulphuric acid recovery process having a primary acid recovery process comprising:

a) spray drying a metal sulphate containing waste stream of sulphuric acid in a heated gas stream of a spray drier, to produce a sulphur trioxide and sulphur dioxide gas stream and water vapour, which water vapour exits the process, and an essentially dry collection of metal sulphate solids;

b) separating said metal sulphate solids from said sulphur trioxide and sulphur dioxide gas stream;

c) feeding said sulphur trioxide and sulphur dioxide gas stream to a catalyst containing converter bed to effect conversion of said sulphur dioxide to sulphur trioxide and generate an essentially sulphur dioxide free converter exit gas; and

d) feeding said sulphur dioxide free converter exit gas to a sulphur trioxide absorption means; and a secondary sulphuric acid recovery process comprising:

e) feeding said metal sulphate solids to a roaster wherein said solids are heated to effect decomposition of said metal sulphates to metal oxides and production of a sulphur dioxide containing roaster off-gas; and combining said sulphur dioxide containing roaster off-gas with said sulphur trioxide and sulphur dioxide gas stream in said primary acid recovery process to produce a combined sulphur dioxide roaster off-gas and sulphur trioxide and sulphur dioxide gas stream.

2. A sulphuric acid recovery process as claimed in claim 1 wherein the sulphur dioxide containing roaster off-gas is fed to said heated gas stream in said spray drier.

3. A sulphuric acid recovery process as claimed in claim 1 wherein the sulphur dioxide containing roaster off-gas is fed with said heated gas stream to said spray drier.

4. A process as claimed in any one of claims 1,2 or 3 wherein the exit gas from said absorption means is fed to an economizer.

5. A process as claimed in any one of claims 1,2 or 3 additionally comprising;

f) feeding said roaster off-gas to a second sulphur dioxide to sulphur trioxide catalyst containing converter bed to generate a sulphur trioxide enriched gas;

g) feeding said sulphur trioxide enriched gas to a sulphuric acid absorption means to produce a sulphur trioxide depleted gas; and

h) combining said sulphur trioxide depleted gas with said sulphur trioxide and sulphur dioxide gas stream in said primary acid recovery process.

FIG. 1

SOLIDS
(METAL SULPHATES)

ACID
PRODUCT

SOLIDS
(METAL OXIDES)

SOLIDS

SOLIDS

FIG. 2

EP 0 421 629 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| A | GB-A-1 385 926 (THE NEW JERSEY ZINC COMPANY) <br> * page 2, line 2 - page 3, line 65 *; & US-A-3713786 (cat. D) | 1 | C 01 B 17/90 |
| A | US-A-2 406 930 (N. TITLESTAD) <br> * claim 1 * | 1 | |
| A | DE-A-2 643 798 (METALLGESELLSCHAFT AG) <br> * claim 1 * | 1 | |
| A | EP-A-0 085 666 (A/S NIRO ATOMIZER) <br> * claim 1 * | 1 | |
| A | EP-A-0 125 142 (HALDOR TOPSOE A/S) <br> * claim 1 * | 1 | |

TECHNICAL FIELDS
SEARCHED (Int. Cl.5)

C 01 B 17/00

The present search report has been drawn up for all claims

| Place of search | Date of completion of the search | Examiner |
|---|---|---|
| BERLIN | 18-12-1990 | CLEMENT J.P. |

EPO FORM 1503 03.82 (P0401)